# EUROPEAN PATENT SPECIFICATION

(11) **EP 3 468 019 B1**
(45) Date of publication and mention of the grant of the patent: **02.03.2022**
(21) Application number: 17195012.4
(22) Date of filing: 05.10.2017
(51) Int. Cl.: B60L 3/04, H02M 1/32, B60L 3/00

(54) **DISCHARGE CIRCUIT FOR DISCHARGING A SMOOTHING CAPACITOR OF AN ELECTRIC POWER CONVERTER, ELECTRIC POWER CONVERTER FOR A VEHICLE, VEHICLE AND METHOD FOR OPERATING AN ELECTRIC POWER CONVERTER**
ENTLADESCHALTUNG ZUR ENTLADUNG EINES GLÄTTUNGSKONDENSATORS EINES STROMWANDLERS, STROMWANDLER FÜR EIN FAHRZEUG, FAHRZEUG UND VERFAHREN ZUM BETRIEB EINES STROMWANDLERS
CIRCUIT DE DÉCHARGE POUR DÉCHARGER UN CONDENSATEUR DE LISSAGE D'UN CONVERTISSEUR DE PUISSANCE ÉLECTRIQUE, CONVERTISSEUR DE PUISSANCE ÉLECTRIQUE POUR UN VÉHICULE, VÉHICULE ET PROCÉDÉ DE FONCTIONNEMENT D'UN CONVERTISSEUR DE PUISSANCE ÉLECTRIQUE

(43) Date of publication of application: 10.04.2019
(73) Proprietor: Valeo Siemens eAutomotive Germany GmbH, 91056 Erlangen (DE)
(72) Inventor: HUBNER, Philip, 91052 Erlangen (DE); GÖTZE, Thomas, 91315 Höchstadt/Aisch (DE)
(74) Representative: Dr. Gassner & Partner mbB

(56) References cited:
- EP-A1- 2 284 982
- US-A1- 2009 268 354
- US-A1- 2013 257 446

## Description

The present invention relates to a discharge circuit for discharging a smoothing capacitor of an electric power converter.

Aside, the present invention relates to an electric power converter for a vehicle, a vehicle and a method for operating an electric power converter.

US 2009/268354 A1 discloses a vehicle protection system for a high-voltage capacitor bank coupled to a high-voltage bus, the vehicle protection system comprising: a discharge circuit coupled to the high-voltage bus and comprising a switch coupled to the high-voltage bus and the discharge controller and a pulse resistor coupled to the switch and a ground. Furthermore, the vehicle protection system comprises a discharge controller coupled to the high-voltage bus and the discharge circuit, the discharge controller being configured to: activate the discharge circuit; determine a first discharge time based on a first voltage level of the high-voltage bus; obtain a second voltage level of the high-voltage bus after the first discharge time; and deactivate the discharge circuit if a difference between the first voltage level and the second voltage level of the high-voltage bus is less than a threshold value.

Electric power converters are widely used to convert voltages from a first voltage level to a second voltage level, particularly with a conversion from AC to DC or vice versa. With respect to automotive applications inverters converting a DC voltage supplied by a high voltage battery into a multiphase AC are of high interest. A DC link of the electric power converter typically comprises a smoothing capacitor for smoothing voltage ripples in the DC link. For safety reasons it is typically requested to discharge the smoothing capacitor, e.g. below a predefined touch voltage. Therefore, a discharge circuit is provided to the electric power converter.

However, it cannot be assured under all circumstances that the smoothing capacitor is disconnected from a DC voltage source, such as the high voltage battery. If the DC voltage source is still connected to the smoothing capacitor and thus to terminals of the discharge circuit, the discharge circuit will not pull a current discharging the capacitor, but will pull a current provided by the DC voltage source. For recognizing that the DC voltage source is disconnected and that the smoothing capacitor is actually dischargable, it has been proposed to compare a voltage dropping over the terminals or the smoothing capacitor, respectively, with a predefined voltage decrease characteristic:
EP 2 284 982 A1 discloses a discharge circuit for a DC power supply smoothing capacitor that is used in a power conversion device that supplies DC power via a switch to the DC power supply smoothing capacitor and an inverter. The inverter comprises a resistor that discharges charge in the capacitor, a switch connected in series with the resistor that either passes or intercepts discharge current flowing from the capacitor to the resistor, a measurement circuit that measures a terminal voltage of the capacitor, and a control circuit that controls continuity and discontinuity of the switch. Therein, the control circuit, after having made the switch continuous and starting discharge of the capacitor by the resistor, if a terminal voltage of the capacitor as measured by the measurement unit exceeds a voltage decrease characteristic set in advance, makes the switch discontinuous and stops discharge by the resistor.

Such a discharge circuit suffers from being only difficultly adjustable to different configurations of the electric power converter as the voltage decrease characteristic is set statically.

Thus, it is an object of the invention to provide an improved discharge circuit, particularly allowing a more flexible operation with respect to various configurations of the electric power converter.

The above object is solved by a discharge circuit according to claim 1.

The invention is based upon the consideration to evaluate whether the smoothing capacitor is dischargeable or the DC voltage source is disconnected from the smoothing capacitor, respectively, by evaluating when a progress of the voltage dropping over the terminals proceeds substantially different from the progress of a delayed counterpart of the voltage. The result of the comparison allows the assumption that the pulled current is not provided by the DC voltage source but by the smoothing capacitor being disconnected from the DC voltage source. Having evaluated this, the discharge is performed with the higher current, which is particularly chosen such that the smoothing capacitor is discharged at least to a predefined voltage within a predefined time span. Note that with respect to the present invention, the term "delayed" may refer to a progress of the voltage being slowed down as well as to a timely offset between the progresses of the voltage and the voltage being timely delayed.

Advantageously, the present invention allows to determine that the smoothing capacitor can be discharged and to continue discharging independently from the configuration of the electric power converter, particularly independently from properties of the smoothing capacitor. This is achieved by evaluating the first value and the second value being dependent on the voltage dropping over the terminals instead of using a static discharging characteristic depending on properties of the smoothing capacitor.

It is preferred that the control unit is configured to continue discharging the smoothing capacitor if the result of the comparison is that an absolute value of a difference between the first value and the second reaches or exceeds a predefined threshold. As the voltage and the delayed voltage are assumed to be decreasing if the smoothing capacitor is able to be discharged, the condition for continuing discharging may be chosen such that the timely progresses of the first value and the second value approximate or cross each other. To avoid an unintended fulfillment of the condition due to variations of the voltage, it is furthermore preferred that the first value and the second value have an offset, particularly that the second value is smaller than the first value, when the voltage is constant.

According to the invention, the discharging unit comprises a resistive element. The resistive element allows the pulled current to be converted into heat.

According to the invention, the discharging unit furthermore comprises a switching element being configured to connect the resistive element to the terminals for pulling the current upon receiving a control signal. In the conducting switching state of the switch the pulled current is substantially constant if the DC source is still connected to the smoothing capacitor or decreases exponentially if the DC source is not connected.

The control signal may be obtained by a vehicle control unit and may thus be considered as an external control signal.

According to the invention, the discharge circuit comprises a delay unit having a low pass element for delaying a timely variation of the voltage. The low pass element may have a time constant chosen such that the progress of the voltage is slowed down to obtain the second value. Alternatively, the delay unit may have a dead-time element. The dead-time element realizes the fixed timely offset between the first value in the second value.

Furthermore, the discharge circuit may comprise a voltage divider unit being connected in parallel to the terminals and having a central tap providing a voltage to the control unit being representative of the first value. The provided voltage may be the first value or may be processed to the first value. Typically, the voltage divider unit comprises two resistors connected in series, wherein the central tap is arranged between the first resistor and the second resistor.

Particularly with respect to provide the offset between the first value and the second value, the voltage divider unit may comprise a second central tap providing a voltage to the delay unit having a different, particularly a lower, voltage ratio than the first central tap and being representative of the second value. The voltage provided at the second central tap may be processed to the second value by the delay unit. The voltage divider unit may comprise a third resistor connected in series to the first resistor and the second resistor, wherein the second tap is arranged between the second resistor and the third resistor being adjacent. Typically, a resistance of the first resistor is higher than a resistance of the third resistor, which is higher than the resistance of the second resistor.

Alternatively, the discharge circuit may comprise a second voltage divider unit being connected in parallel to the first voltage divider unit and having a central tap providing a voltage to the delay unit having a different, particularly a lower, voltage ratio than the first voltage divider unit. The voltage provided at the central tap of the second voltage divider unit may be processed to the second value by the delay unit.

Each resistor of the first voltage divider unit and/or the second voltage divider unit may be formed by a single resistor component or a plurality of resistor components being connected in series and/or in parallel to obtain a desired resistance of the respective resistor.

For realizing the discharge with the higher current, the discharge circuit according to the invention comprises a second discharging unit connected in parallel to the terminals and controllable by the control unit to discharge the smoothing capacitor if the discharging is to be continued. The second discharging unit comprises a resistive element connected in series to a switching element. Preferably, the resistance of the resistive element of the second discharge unit is lower than the resistance of the resistive element of the first discharge unit. It is preferred that the first discharge unit and the second discharge unit discharge the smoothing capacitor concurrently if the discharging is to be continued. Then the higher current is the sum of the current pulled by the first discharging unit and the current pulled by the second discharging unit. Alternatively, pulling the current by the first discharging unit may be stopped by the control unit if the second discharge unit is controlled to discharge the smoothing capacitor.

According to an alternative not falling within the scope of the claimed invention, the first discharging unit may comprise a second resistive element. The second resistive element may have a lower resistance than the first resistive element and conduct the higher current instead of the first resistive element. Alternatively, the control unit may be configured to switch the second resistive element in parallel to the first resistive element if the discharging of the smoothing capacitor is to be continued. By switching both resistive elements in parallel the combined resistance is decreased in order to allow the discharging with the higher current.

Preferably, the control unit and/or the delay unit are implemented by an analog circuit, particularly having a comparator obtaining the first and the second value, or by a microcontroller. Using a comparator renders the effort for realizing the analog circuit very low. Using a microcontroller, the functions of the control unit and/or the delay unit may be implemented within the same piece of hardware that controls a power unit of the electric power converter, advantageously

Aside, the present invention relates to an electric power converter for a vehicle according to claim 10. Preferably, the electric power converter is an inverter. The electric power converter may comprise a power unit connected in parallel to the smoothing capacitor and/or the discharge circuit. The power unit may be configured to provide a multiphase AC output current to stator windings of a motor.

Furthermore, the present invention relates to a vehicle according to claim 11.

Finally, the present invention relates to a method according to claim 12.

All statements referring to the inventive discharge circuit apply analogously to the inventive electric power converter, the inventive vehicle and the inventive method, so that the above-mentioned advantages of the inventive discharge circuit may be achieved as well.

Further details and advantages of the invention are disclosed in the following, wherein reference is made to the schematic drawings showing:
- Fig. 1: a circuit diagram of an electric power converter according to a first embodiment of the invention;
- Fig. 2: a diagram depicting voltages in the electric power converter over time;
- Fig. 3: a circuit diagram of a discharging unit of an electric power converter according to a comparative example;
- Fig. 4: a circuit diagram of a first discharging unit of an electric power converter according to a further comparative example;
- Fig. 5: a circuit diagram of a voltage divider unit of an electric power converter according to a further embodiment of the invention; and
- Fig. 6: a principle drawing of an embodiment of a vehicle according to the invention.

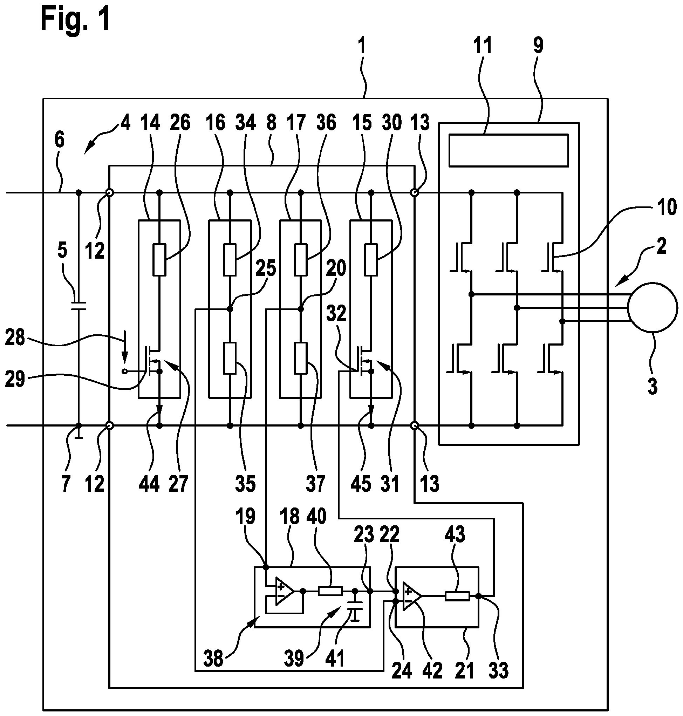

Fig. 1 is a circuit diagram of a first embodiment of an electric power converter 1 providing a three-phase AC output 2 to stator windings of a motor 3.

The electric power converter 1 comprises a DC link 4 with a smoothing capacitor 5 connected between a high potential 6 and low potential 7, e.g. a ground potential, of the DC link 4. Furthermore, the electric power converter 1 comprises a discharge circuit 8 and a power unit 9 each connected in parallel to the smoothing capacitor 5. In fig. 1 the electric power converters is depicted exemplarily as an inverter, wherein the power unit 9 comprises a plurality of switching elements 10 connected to half bridges for each output phase of the electric power converter and a controller 11 configured to control the switching elements to convert the DC voltage into the AC output 2 having three phases.

The discharge circuit 8 comprises two terminals 12 connected to the smoothing capacitor 5 and two further terminals 13 connected to the power unit 9. A first discharging unit 14, a second discharging unit 15, a first voltage divider unit 16 and a second voltage divider unit 17 of the discharge circuit 8 are each connected in parallel to the smoothing capacitor 5 or the terminals 12, respectively. Furthermore, the discharge unit 8 comprises a delay unit 18 having an input port 19 connected to a central tap 20 of the second voltage divider unit 17. Additionally, the discharge unit 8 comprises a control unit 21 having a first input port 22 connected to an output port 23 of the delay unit 18 and a second input port 24 connected to a central tap 25 of the first voltage divider unit 16. The delay unit 18 and the control unit 21 are implemented by an analog circuit.

The first discharging unit 14 comprises a resistive element 26 connected in series to a switching element 27, such as a mechanical switching element or a semiconductor switching elements, e.g. an insulated gate field-effect transistor (IGFET) or an insulated gate bipolar transistor (IGBT). The switching element 27 obtains an external control signal 28 at a control terminal 29.

The second discharging unit 15 comprises a resistive element 30 connected in series to a switching element 31, such as a mechanical switching element or a semiconductor switching elements, e.g. an IGFET or an IGBT. A control terminal 32 of the switching element 31 is connected to an output port 33 of the control unit 21. A resistance of the resistive element 26 of the first discharging unit 14 is higher than a resistance of the resistive element 30 of the second discharging unit 15. A typical value for the resistance of the resistive element 26 may be 5 kΩ, whereas the resistance of the resistive element 30 may be 370 Ω.

The first voltage divider unit 16 comprises a first resistor 34 interconnected between the high potential 6 of the DC link 4 and the central tap 25. Furthermore, the first voltage divider unit 16 comprises a second resistor 35 interconnected between the central tap 25 and the low potential 7 of the DC link 4. A resistance of the first resistor 34 may be chosen to 50 kΩ and a resistance of the second resistor 35 may be chosen to 400 Ω.

The second voltage divider unit 17 comprises a first resistor 36 interconnected between the high potential 6 of the DC link 4 and the central tap 20. Additionally, the second voltage divider unit 17 comprises a second resistor 37 interconnected between the central tap 20 and the low potential 7 of the DC link 4. A voltage ratio of the first voltage divider 16 is higher than the voltage ratio of the second voltage divider unit 17. Thus, a resistance of the first resistor 36 may be 50 kΩ and a resistance of the second resistor 35 may be chosen to 390 Ω.

The delay unit 18 comprises and impedance converter 38 connected to the input port 19 on an input side and connected to an input side of a low pass element 39 on an output side. The output side of the low pass element 39 is connected to the output port 23 of the delay unit. A resistance of the resistor 40 of the low pass element 39 may be 100 kΩ and a capacitance of a capacitor 41 of the low pass element 39 may be 2.2 µF, resulting in a time constant of 0,22 sec.

The control unit 21 comprises a comparator 42 with a positive input connected to the port 22 and a negative input connected to the port 24. An output port of the comparator 42 is connected to the port 33 via series resistor 43 of 10 Ω, exemplarily.

The discharge circuit 8 is configured to discharge the smoothing capacitor 5 upon receiving the control signal 28. The control signal 28 switches the switching element 27 to its conducting state. This results in that the resistive element 26 is connected to the low potential 7 and pulls a current 44 flowing between the terminals 12. If a DC voltage source externally connectable the electric power converter one or the smoothing capacitor 5, respectively, is disconnected, the current 44 is pulled from the smoothing capacitor 5 discharges it.

However, it cannot be assured that the DC voltage source is disconnected. If the DC voltage source is connected, the current 44 is mainly pulled from the DC voltage source and does not discharge the smoothing capacitor 5. To allow a discharge of the smoothing capacitor 5 below a predefined touch voltage of e.g. 60 V within a predefined time the second discharging unit 15 is provided which allows discharging the capacitor faster, i.e. with an additional and higher current 45 than the current 44. Thus, the control unit 21 is configured to provide a voltage switching the switching element 31 to its conducting state and connecting the resistive element 30 to the low potential 7 only after having determined that the DC voltage source is disconnected from the smoothing capacitor 5. The evaluation whether the DC voltage source is connected or disconnected is described in the following:

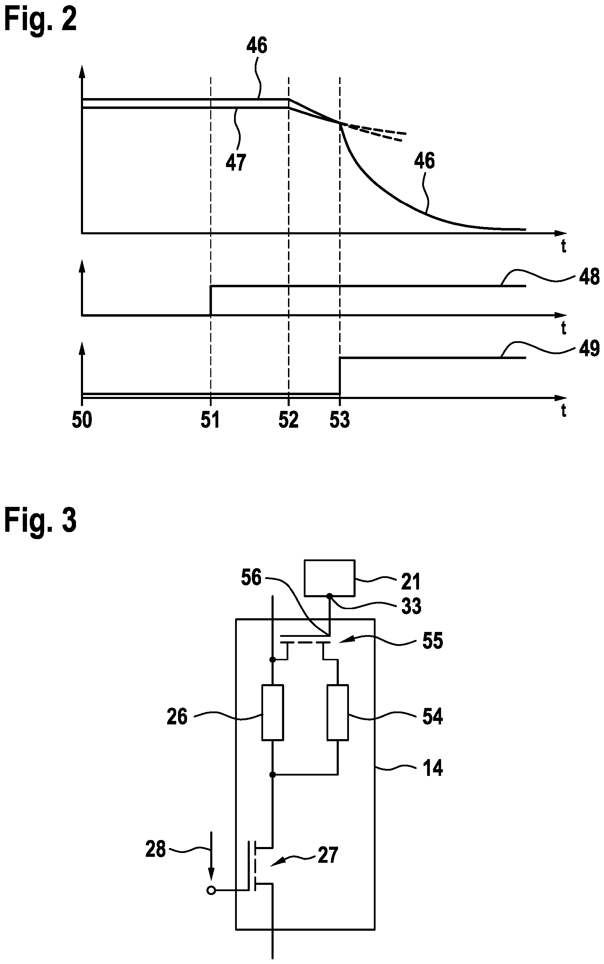

Fig. 2 depicts a progress of voltage 46 at the central tap 25 of the first voltage divider unit 16, a progress of a voltage 47 at the output port 23 of the delay unit 18, a progress of a voltage 48 of the control signal 28 at the control terminal 29 and a progress of a voltage 49 at the output port 33 of the control unit 21 each over a time t and with reference to the low potential 7.

At a time 50 it is assumed that the DC voltage source is connected to the smoothing capacitor 5 and that no control signal 28 is obtained at the control terminal 29 of the switching element 27 of the first discharging unit 14.

Although the DC voltage source is still connected to the smoothing capacitor 5, at a time 51 the control signal 28 is obtained and the voltage 48 rises. Thus, the switching element 27 is switched to the conducting switching state causing the current 44 to flow. The voltage 46 remains substantially constant at a voltage level proportional to the voltage ratio of the first voltage divider unit 16 and a voltage provided by DC voltage source. As the voltage ratio of the second voltage divider unit 17 is smaller than the voltage ratio of the voltage divider unit 16 a voltage at the central tap 20 remains substantially constant at a smaller voltage level than the voltage 46 as well.

At a time 52 the DC voltage source is disconnected from the smoothing capacitor 5. Thus, the current 44 is pulled from the smoothing capacitor 5 discharging it. As of the voltage dropping over the terminals 12 is decreasing exponentially, the voltage 46 at the central tap 25 of the first voltage divider unit 16 and the voltage at the central tap 20 of the second voltage divider 17 decrease proportionally as well. The voltage 46 at the central tap 25 is provided to the port 24 of the control unit 21 as a first value. The voltage at the central tap 20 is provided to the delay unit 18 which adjusts an impedance at the input port 19 by the impedance converter 38 and provides the adjusted voltage to the low pass element 39 which delays the adjusted voltage, i.e. slows down its progress, to the voltage 47 at the output pot 23 of the delay unit 18. The voltage 47 is provided as a second value to the input port 22 of the control unit 21. The comparator 42 of the control unit 21 compares the first value and the second value.

Within a time span between the time 52 and a time 53 the first value is higher than the second value causing the comparator 42 to provide the voltage 49 to the control terminal 32 of the switching element 31 of the second discharging unit 15 that does not connect the resistive element 30 the low potential 7.

At the time 53 an absolute value of a difference between the first value and the second value is smaller than a predefined threshold, e.g. zero or near to zero. By fulfilling this condition, it is recognized that the smoothing capacitor is dischargeable. This causes the cooperator 40 to raise the voltage 49 to a level that switches the switching element 31 of the second discharging unit 15 to the conducting switching state causing the current 45 to flow. As the resistance of the resistive element 30 is much lower than the resistance of the resistive element 26, the higher current being the sum of the currents 44, 45 is pulled from the smoothing capacitor 5. Consequently, the discharging of the smoothing capacitor 5 with the higher current is not triggered before the time 53, at which it is assured that the DC voltage source is disconnected from the smoothing capacitor 5.

Fig. 3 is a circuit diagram of a discharging unit 14 according to a comparative example of an electric power converter corresponding to the one depicted in Fig. 1, wherein the second discharging unit 15 is omitted.

In addition to a first resistive element 26 and a switching element 27 connected in series the discharging unit 14 comprises a second resistive element 54 connected in series to a second switching element 55 both connected in parallel to the first resistive element 26. A control terminal 56 of the second switching element 55 is connected to the output port 33 of the control unit 21. Thus, if the comparator 42 rises the voltage 49 at the port 33, the second resistive element 54 is connected in parallel to the first resistive element 26 resulting in the decreased combined resistance and causing the higher current to flow.

Alternatively, the second switching element 55 may be a toggle switch which connects the first resistive element 26 to the first switching element 27 if the voltage at the port 33 is low before the time 53 and connects the second resistive element 54 having a smaller resistance than the first resistive element 26 to the switching element 27 if the voltage at the port 33 rises at the time 53.

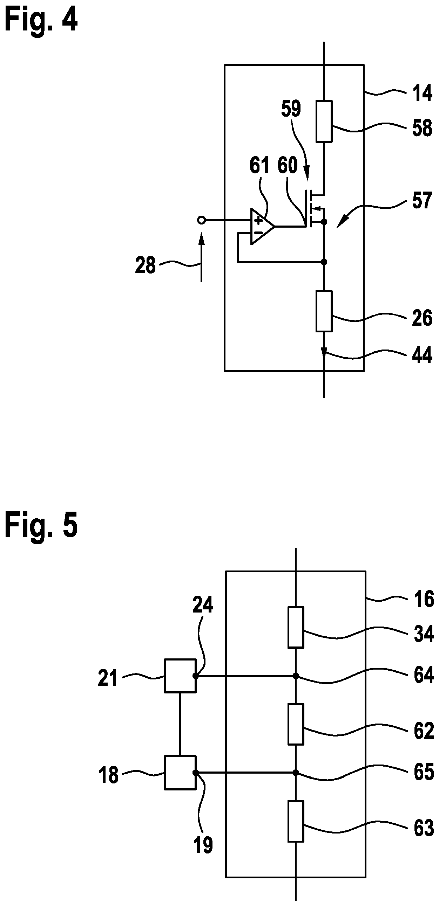

Fig. 4 the circuit diagram of a first discharging unit 14 according to a comparative example of an electric power converter corresponding to the one depicted in Fig. 1.

The first discharging unit 14 comprises a current source 57 connected in series to the resistive element 26 interconnected between the low potential 7 and the current source 57 and to a series resistor 58 interconnected between the high potential 6 and the current source 57. The current source 57 is formed by a switching element 59 having a control terminal 60 connected to an output of an operational amplifier 61. A positive input of the operational amplifier 61 obtains the control signal 28. A negative input of the operational amplifier 61 is connected to a low potential 6 side of the switching element 59.

Upon receiving the control signal 28 at the time 51 the voltage source 57 pulls the current 44 being constant if the DC voltage source is connected to the smoothing capacitor 5 as well if the DC voltage source is disconnected from the smoothing capacitor 5. Thus, the voltage 46 decreases substantially linearly between the times 52 and 53 and the voltage 47 has a slightly different but still exponentially decreasing progress.

Fig. 5 is a circuit diagram of a voltage divider unit 16 according to a further embodiment of an electric power converter corresponding to the first embodiment, wherein the second voltage divider unit 17 is omitted.

The voltage divider unit 16 comprises a first resistor 34 connected in series to a second resistor 62 and a third resistor 63. A first central tap 64 between the first resistor 34 and the second resistor 62 is connected to the input port 24 of the control unit 21. A second central tap 65 is connected to the input port 19 of the delay unit 18. The sum of the resistances of the resistors 62, 63 corresponds to the resistance of the second resistor 35 of the first voltage divider unit 16 depicted in Fig. 1 and the resistance of the third resistor 63 corresponds to the resistance of the second resistor 37 of the second voltage divider unit 17 depicted in Fig. 1.

According to a further embodiment of the electric power converter corresponding to any of the aforementioned ones, the delay unit 18 comprises a dead-time element instead of the low-pass element 39. The dead-time element causes the first value and the second value to have constant timely offset.

According to a further embodiment of the electric power converter corresponding to any of the aforementioned ones the delay unit 18 and/or the control unit 21 are implemented by a microcontroller realizing the functions of the delay unit 18 and/or the control unit 21 by suitable program sections. Functions of the controller 11 of the power unit 9 may be implemented by the microcontroller as well.

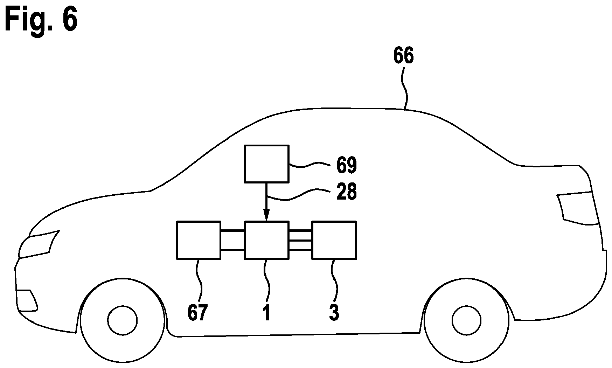

Fig. 6 is a principle drawing of an embodiment of a vehicle 66, comprising a high voltage battery 67 corresponding to the aforementioned DC voltage source, an electric power converter 1 corresponding to any of the aforementioned embodiments, a drive motor 3 and a vehicle control unit 69. The high voltage battery 67 is connectable to and disconnectable from the DC link 4 and the smoothing capacitor 5 of the electric power converter 1. The drive motor 3 is connected to the AC output to of the electric power converter 1. The vehicle control unit 69 is configured to provide the control signal 28 to the electric power converter 1.

## Claims

1. Discharge circuit (8) for discharging a smoothing capacitor (5) of an electric power converter (1), comprising
- two terminals (12) being connectable to the smoothing capacitor (5);
- a first discharging unit (14)
(i) connected in parallel to the terminals (12),
(ii) configured to pull a current flowing between the terminals (12) and
(iii) comprising a resistive element (26) and a switching element (27) being configured to connect the resistive element (26) to the terminals (12) for pulling the current upon receiving a control signal (28);
- a control unit (21) configured to compare a first value representative of a voltage dropping over the terminals (12) when the discharging unit (14) pulls the current with a second value representative of the voltage being time delayed and to continue discharging the smoothing capacitor (5) with a higher current than the pulled current depending on a result of the comparison;
- a delay unit (18) having a low pass element (39) for delaying a time variation of the voltage or having a dead-time element configured to realize a fixed time offset; and
- a second discharging unit (15)
(i) connected in parallel to the terminals (12),
(ii) comprising a resistive element (30) and a switching element (31) connected in series to the resistive element (30) and
(iii) controllable by the control unit (21) to discharge the smoothing capacitor (5) if the discharging is to be continued;
wherein the second value is provided to a first input port (22) of the control unit (21) by an output port (23) of the delay unit (18) connected to the first input port (22), the first value is provided to a second input port (24) of the control unit (21) and a control terminal (32) of the switching element (31) of the second discharging unit (15) is connected to an output port (33) of the control unit (21).

2. Discharge circuit (8) according to claim 1, **characterized in that** the control unit (21) is configured to continue discharging the smoothing capacitor (5) if the result of the comparison is that an absolute value of a difference between the first value and the second value reaches or exceeds a predefined threshold.

3. Discharge circuit (8) according to claim 1 or 2, **characterized in that**
- the low pass element (39) has a time constant chosen such that the progress of the voltage is slowed down to obtain the second value or
- the dead-time element is configured to realize a fixed time offset between the progression of the voltage and that of the voltage being time delayed.

4. Discharge circuit (8) according to any of the preceding claims, **characterized in that** the first value and the second value have an offset, when the voltage is constant.

5. Discharge circuit (8) according to any of the preceding claims, **characterized in that** the first discharge unit (14) and the second discharge unit (15) are configured to discharge the smoothing capacitor (5) concurrently if the discharging is to be continued.

6. Discharge circuit (8) according to any of the preceding claims, **characterized in that** it comprises a voltage divider unit (16) being connected in parallel to the terminals (12) and having a central tap (25, 64) configured to provide a voltage to the control unit (21) being representative of the first value.

7. Discharge circuit (8) according to claim 6, **characterized in that** the voltage divider unit (16) comprises a second central tap (65) configured to provide a voltage to the delay unit (18) having a different, particularly a lower, voltage ratio than the first central tap (64) and being representative of the second value.

8. Discharge circuit (8) according to claims 6, **characterized in that** it comprises a second voltage divider unit (17) being connected in parallel to the first voltage divider unit (16) and having a central tap (20) configured to provide a voltage to the delay unit (18) having a different, particularly a lower, voltage ratio than the first voltage divider unit (16).

9. Discharge circuit (8) according to any of the preceding claims, **characterized in that** the control unit (21) and/or the delay unit (18) are implemented by an analog circuit, particularly having a comparator (42) configured to receive the first and the second value, or by a microcontroller.

10. Electric power converter (1) for a vehicle (66), comprising a smoothing capacitor (5) and a discharge circuit (8) according to any of claims 1 to 9.

11. Vehicle (66), comprising an electric power converter (1) according to claim 10 configured to provide a voltage supply for a driving motor (3) of the vehicle (66)

12. Method for operating an electric power converter (1), the electric power converter (1) comprising a smoothing capacitor (5) and a discharge circuit (8) for discharging the smoothing capacitor (5), the discharge circuit (8) comprising
- two terminals (12) being connected to the smoothing capacitor (5),
- a first discharging unit (14)
(i) connected in parallel to the terminals (12) and
(ii) comprising a resistive element (26) and a switching element (27);
- a control unit (21) comprising a first input port (22), a second input port (24) and an output port (33);
- a delay unit (18) comprising an output port (23) being connected to the first input port (22) of the control unit (21); and
- a second discharging unit (15)
(i) connected in parallel to the terminals (12),
(ii) comprising a resistive element (30) and a switching element (31) connected in series to the resistive element (30), the switching element (31) comprising a control terminal (32) being connected to the output port (33) of the control unit (21);
the method comprising:
- connecting, by means of the switching element (27) of the first discharge unit (14), the resistive element (26) to the terminals (12) upon receiving a control signal (28) and pulling a current flowing between the terminals (12) ;
- delaying, by means of the delay unit (18), a voltage dropping over the terminals (12), the delay unit (18) having a low pass element (39) that delays a time variation of the voltage or having a dead-time element that realized a fixed time offset;
- providing a first value representative of the voltage dropping over the terminals (12), when the current is pulled, to the second input (24) of the control unit (21);
- providing a second value representative of the voltage being time delayed to the first input port (2)) of the control unit (21) by the output port (23) of the delay unit (18);
- comparing, by means of the control unit (21), the first value with the second value; and
- continuing, by means of the control unit (21), the discharging of the smoothing capacitor (5) with a higher current than the pulled current depending on a result of the comparison, wherein the control unit (21) controls the second discharging unit (15) to discharge the smoothing capacitor (5) if the discharging is to be continued.

## Patentansprüche

1. Entladeschaltung (8) zum Entladen eines Glättungskondensators (5) eines elektrischen Stromrichters (1), umfassend
- zwei Klemmen (12), die mit dem Glättungskondensator (5) verbunden werden können;
- eine erste Entladungseinheit (14)
(i) die parallel zu den Klemmen (12) angeschlossen sind,
(ii) dazu konfiguriert ist, einen zwischen den Klemmen (12) fließenden Strom zu ziehen, und
(iii) ein Widerstandselement (26) und ein Schaltelement (27) umfasst, das so konfiguriert ist, dass es das Widerstandselement (26) mit den Klemmen (12) verbindet, um beim Empfang eines Steuersignals (28) den Strom zu ziehen;
- eine Steuereinheit (21), die so konfiguriert ist, dass sie einen ersten Wert, der für eine über die Klemmen (12) abfallende Spannung repräsentativ ist, wenn die Entladeeinheit (14) den Strom zieht, mit einem zweiten Wert vergleicht, der für die zeitlich verzögerte Spannung repräsentativ ist, und die die Entladung des Glättungskondensators (5) mit einem höheren Strom als dem gezogenen Strom in Abhängigkeit von dem Ergebnis des Vergleichs fortsetzt;
- eine Verzögerungseinheit (18) mit einem Tiefpasselement (39) zum Verzögern einer zeitlichen Veränderung der Spannung oder mit einem Totzeitelement, das so konfiguriert ist, dass es einen festen Zeitversatz umsetzt; und
- eine zweite Entladeeinheit (15)
(i) die parallel zu den Klemmen (12) angeschlossen ist,
(ii) mit einem Widerstandselement (30) und einem Schaltelement (31), das mit dem Widerstandselement (30) in Reihe geschaltet ist, und
(iii) von der Steuereinheit (21) steuerbar ist, um den Glättungskondensator (5) zu entladen, wenn die Entladung fortgesetzt werden soll;
wobei der zweite Wert einem ersten Eingangsanschluss (22) der Steuereinheit (21) durch einen mit dem ersten Eingangsanschluss (22) verbundenen Ausgangsanschluss (23) der Verzögerungseinheit (18) zugeführt wird, der erste Wert einem zweiten Eingangsanschluss (24) der Steuereinheit (21) zugeführt wird und ein Steueranschluss (32) des Schaltelements (31) der zweiten Entladeeinheit (15) mit einem Ausgangsanschluss (33) der Steuereinheit (21) verbunden ist.

2. Entladeschaltung (8) nach Anspruch 1, **dadurch gekennzeichnet, dass** die Steuereinheit (21) so konfiguriert ist, dass sie die Entladung des Glättungskondensators (5) fortsetzt, wenn das Ergebnis des Vergleichs ist, dass der Absolutwert der Differenz zwischen dem ersten Wert und dem zweiten Wert einen vordefinierten Schwellenwert erreicht oder überschreitet.

3. Entladeschaltung (8) nach Anspruch 1 oder 2, **dadurch gekennzeichnet, dass**
- das Tiefpasselement (39) eine Zeitkonstante hat, die so gewählt ist, dass der Verlauf der Spannung verlangsamt wird, um den zweiten Wert zu erhalten, oder
- das Totzeitelement so konfiguriert ist, dass es einen festen Zeitversatz zwischen dem Verlauf der Spannung und dem der zeitlich verzögerten Spannung realisiert.

4. Entladeschaltung (8) nach einem der vorhergehenden Ansprüche, **dadurch gekennzeichnet, dass** der erste Wert und der zweite Wert einen Offset haben, wenn die Spannung konstant ist.

5. Entladeschaltung (8) nach einem der vorhergehenden Ansprüche, **dadurch gekennzeichnet, dass** die erste Entladeeinheit (14) und die zweite Entladeeinheit (15) so konfiguriert sind, dass sie den Glättungskondensator (5) gleichzeitig entladen, wenn die Entladung fortgesetzt werden soll.

6. Entladeschaltung (8) nach einem der vorhergehenden Ansprüche, **dadurch gekennzeichnet, dass** sie eine Spannungsteilereinheit (16) umfasst, die parallel zu den Klemmen (12) geschaltet ist und einen zentralen Abgriff (25, 64) aufweist, der so konfiguriert ist, dass er eine Spannung an die Steuereinheit (21) liefert, die für den ersten Wert repräsentativ ist.

7. Entladeschaltung (8) nach Anspruch 6, **dadurch gekennzeichnet, dass** die Spannungsteilereinheit (16) einen zweiten zentralen Abgriff (65) umfasst, der so konfiguriert ist, dass er eine Spannung an die Verzögerungseinheit (18) liefert, die ein anderes, insbesondere ein niedrigeres Spannungsverhältnis als der erste zentrale Abgriff (64) aufweist und für den zweiten Wert repräsentativ ist.

8. Entladeschaltung (8) nach Anspruch 6, **dadurch gekennzeichnet, dass** sie eine zweite Spannungsteilereinheit (17) umfasst, die parallel zu der ersten Spannungsteilereinheit (16) geschaltet ist und einen zentralen Abgriff (20) aufweist, der so konfiguriert ist, dass er eine Spannung an die Verzögerungseinheit (18) liefert, die ein anderes, insbesondere ein niedrigeres Spannungsverhältnis als die erste Spannungsteilereinheit (16) aufweist.

9. Entladeschaltung (8) nach einem der vorhergehenden Ansprüche, **dadurch gekennzeichnet, dass** die Steuereinheit (21) und/oder die Verzögerungseinheit (18) durch eine analoge Schaltung, insbesondere mit einem Komparator (42), der zum Empfang des ersten und des zweiten Wertes ausgebildet ist, oder durch einen Mikrocontroller realisiert sind.

10. Elektrischer Stromrichter (1) für ein Fahrzeug (66), mit einem Glättungskondensator (5) und einer Entladeschaltung (8) nach einem der Ansprüche 1 bis 9.

11. Fahrzeug (66), umfassend einen elektrischen Stromrichter (1) nach Anspruch 10, der so konfiguriert ist, dass er eine Spannungsversorgung für einen Antriebsmotor (3) des Fahrzeugs (66) bereitstellt.

12. Verfahren zum Betrieb eines elektrischen Stromrichters (1), der einen Glättungskondensator (5) und eine Entladeschaltung (8) zum Entladen des Glättungskondensators (5) umfasst, wobei die Entladeschaltung (8) umfasst:
- zwei Klemmen (12), die mit dem Glättungskondensator (5) verbunden sind,
- eine erste Entladungseinheit (14),
(i) die parallel zu den Klemmen (12) angeschlossen ist und
(ii) ein Widerstandselement (26) und ein Schaltelement (27) aufweist;
- eine Steuereinheit (21) mit einem ersten Eingangsanschluss (22), einem zweiten Eingangsanschluss (24) und einem Ausgangsanschluss (33);
- eine Verzögerungseinheit (18) mit einem Ausgangsanschluss (23), der mit dem ersten Eingangsanschluss (22) der Steuereinheit (21) verbunden ist; und
- eine zweite Entladeeinheit (15)
(i) die parallel zu den Klemmen (12) angeschlossen ist und
(ii) ein Widerstandselement (30) und ein Schaltelement (31) aufweist, das mit dem Widerstandselement (30) in Reihe geschaltet ist, wobei das Schaltelement (31) einen Steueranschluss (32) aufweist, der mit dem Ausgangsanschluss (33) der Steuereinheit (21) verbunden ist;
wobei das Verfahren umfasst:
- Verbinden des Widerstandselements (26) mit den Klemmen (12) mittels des Schaltelements (27) der ersten Entladeeinheit (14) beim Empfang eines Steuersignals (28) und Ziehen eines zwischen den Klemmen (12) fließenden Stroms;
- Verzögern einer über die Klemmen (12) abfallenden Spannung mittels der Verzögerungseinheit (18), wobei die Verzögerungseinheit (18) ein Tiefpasselement (39) aufweist, das eine zeitliche Veränderung der Spannung verzögert, oder ein Totzeitelement, das einen festen Zeitversatz umsetzt;
- Liefern eines ersten Wertes an den zweiten Eingang (24) der Steuereinheit (21), der repräsentativ für die über die Klemmen (12) abfallende Spannung ist, wenn der Strom gezogen wird;
- Bereitstellen eines zweiten Wertes, der für die Spannung repräsentativ ist, die über den Ausgang (23) der Verzögerungseinheit (18) zeitlich verzögert an den ersten Eingangsanschluss (2) der Steuereinheit (21) angelegt wird;
- Vergleichen des ersten Wertes mit dem zweiten Wert mit Hilfe der Steuereinheit (21); und
- Fortsetzen der Entladung des Glättungskondensators (5) mittels der Steuereinheit (21) mit einem höheren Strom als dem gezogenen Strom in Abhängigkeit von einem Ergebnis des Vergleichs, wobei die Steuereinheit (21) die zweite Entladeeinheit (15) zum Entladen des Glättungskondensators (5) steuert, wenn die Entladung fortgesetzt werden soll.

## Revendications

1. Circuit de décharge (8) pour décharger un condensateur de lissage (5) d'un convertisseur de puissance électrique (1), comprenant
- deux bornes (12) pouvant être connectées au condensateur de lissage (5) ;
- une première unité de décharge (14)
(i) connectée en parallèle aux bornes (12),
(ii) configurée pour tirer un courant circulant entre les bornes (12) et
(iii) comprenant un élément résistif (26) et un élément de commutation (27) étant configuré pour connecter l'élément résistif (26) aux bornes (12) pour tirer le courant à réception d'un signal de commande (28) ;
- une unité de commande (21) configurée pour comparer une première valeur représentative d'une chute de tension sur les bornes (12) lorsque l'unité de décharge (14) tire le courant avec une seconde valeur représentative de la tension temporisée et pour continuer à décharger le condensateur de lissage (5) avec un courant plus élevé que le courant tiré en fonction d'un résultat de la comparaison ;
- une unité de temporisation (18) ayant un élément passe-bas (39) pour temporiser une variation temporelle de la tension ou ayant un élément à temps mort configuré pour réaliser un décalage temporel fixe ; et
- une seconde unité de décharge (15)
(i) connectée en parallèle aux bornes (12),
(ii) comprenant un élément résistif (30) et un élément de commutation (31) connecté en série à l'élément résistif (30) et
(iii) pouvant être commandée par l'unité de commande (21) pour décharger le condensateur de lissage (5) si la décharge doit être poursuivie ;
en ce que la seconde valeur est fournie à un premier port d'entrée (22) de l'unité de commande (21) par un port de sortie (23) de l'unité de temporisation (18) connectée au premier port d'entrée (22), la première valeur étant fournie à un second port d'entrée (24) de l'unité de commande (21) et une borne de commande (32) de l'élément de commutation (31) de la seconde unité de décharge (15) est connectée à un port de sortie (33) de l'unité de commande (21).

2. Circuit de décharge (8) selon la revendication 1, **caractérisé en ce que** l'unité de commande (21) est configurée pour continuer à décharger le condensateur de lissage (5) si le résultat de la comparaison est qu'une valeur absolue d'une différence entre la première valeur et la seconde valeur atteint ou dépasse un seuil prédéfini.

3. Circuit de décharge (8) selon la revendication 1 ou 2, **caractérisé en ce que**
- l'élément passe-bas (39) a une constante de temps sélectionnée de façon à ce que la progression de la tension soit ralentie pour obtenir la seconde valeur ou
- l'élément à temps mort est configuré pour réaliser un décalage temporel fixe entre la progression de la tension et celle de la tension temporisée.

4. Circuit de décharge (8) selon l'une des revendications précédentes, **caractérisé en ce que** la première valeur et la seconde valeur présentent un décalage lorsque la tension est constante.

5. Circuit de décharge (8) selon l'une des revendications précédentes, **caractérisé en ce que** la première unité de décharge (14) et la seconde unité de décharge (15) sont configurées pour décharger simultanément le condensateur de lissage (5) si la décharge doit être poursuivie.

6. Circuit de décharge (8) selon l'une des revendications précédentes, caractérisé en qu'il comprend une unité diviseur de tension (16) connectée en parallèle aux bornes (12) et ayant une prise centrale (25, 64) configurée pour fournir une tension à l'unité de commande (21) qui est représentative de la première valeur.

7. Circuit de décharge (8) selon la revendication 6, **caractérisé en ce que** l'unité diviseur de tension (16) comprend une seconde prise centrale (65) configurée pour fournir une tension à l'unité de temporisation (18) ayant un rapport de tension différent, en particulier, inférieur à celui de la première prise centrale (64) et étant représentatif de la seconde valeur.

8. Circuit de décharge (8) selon la revendication 6, **caractérisé en ce qu'**il comprend une seconde unité diviseur de tension (17) qui est connectée en parallèle à la première unité diviseur de tension (16) et ayant une prise centrale (20) configurée pour fournir une tension à l'unité de temporisation (18) ayant un rapport de tension différent, en particulier inférieur à celui de la première unité diviseur de tension (16).

9. Circuit de décharge (8) selon l'une des revendications précédentes, **caractérisé en ce que** l'unité de commande (21) et/ou l'unité de temporisation (18) sont mises en oeuvre par un circuit analogique, en particulier ayant un comparateur (42) configuré pour recevoir la première et la seconde valeur, ou par un microcontrôleur.

10. Convertisseur de puissance électrique (1) pour un véhicule (66), comprenant un condensateur de lissage (5) et un circuit de décharge (8) selon l'une des revendications 1 à 9.

11. Véhicule (66), comprenant un convertisseur de puissance électrique (1) selon la revendication 10 configuré pour fournir une alimentation en tension à un moteur d'entraînement (3) du véhicule (66).

12. Procédé de fonctionnement d'un convertisseur de puissance électrique (1), le convertisseur de puissance électrique (1) comprenant un condensateur de lissage (5) et un circuit de décharge (8) pour décharger le condensateur de lissage (5), le circuit de décharge (8) comprenant
- deux bornes (12) qui sont connectées au condensateur de lissage (5),
- une première unité de décharge (14)
(i) connectée en parallèle aux bornes (12) et
(ii) comprenant un élément résistif (26) et un élément de commutation (27) ;
- une unité de commande (21) comprenant un premier port d'entrée (22), un second port d'entrée (24) et un port de sortie (33) ;
- une unité de temporisation (18) comprenant un port de sortie (23) qui est connecté au premier port d'entrée (22) de l'unité de commande (21) ; et
- une seconde unité de décharge (15)
(i) connectée en parallèle aux bornes (12),
(ii) comprenant un élément résistif (30) et un élément de commutation (31) connecté en série à l'élément résistif (30), l'élément de commutation (31) comprenant une borne de commande (32) qui est connectée au port de sortie (33) de l'unité de commande (21) ;
le procédé consistant à :
- connecter, au moyen de l'élément de commutation (27) de la première unité de décharge (14), l'élément résistif (26) aux bornes (12) à réception d'un signal de commande (28) et tirer un courant circulant entre les bornes (12) ;
- temporiser, au moyen de l'unité de temporisation (18), une chute de tension sur les bornes (12), l'unité de temporisation (18) ayant un élément passe-bas (39) qui temporise une variation temporelle de la tension ou ayant un élément à temps mort qui réalise un décalage temporel fixe ;
- fournir une première valeur représentative de la chute de tension sur les bornes (12), lorsque le courant est tiré, à la seconde entrée (24) de l'unité de commande (21) ;
- fournir une seconde valeur représentative de la tension qui est temporisée au premier port d'entrée (2) de l'unité de commande (21) par le port de sortie (23) de l'unité de temporisation (18) ;
- comparer, au moyen de l'unité de commande (21), la première valeur avec la seconde valeur ; et
- continuer, au moyen de l'unité de commande (21), la décharge du condensateur de lissage (5) avec un courant plus élevé que le courant tiré en fonction d'un résultat de la comparaison, en ce que l'unité de commande (21) commande la seconde unité de décharge (15) de décharger le condensateur de lissage (5) si la décharge doit être poursuivie.
